(19) Europäisches Patentamt
European Patent Office
Office européen des brevets

(11) **EP 4 128 522 B1**

(12) **EUROPÄISCHE PATENTSCHRIFT**

(45) Veröffentlichungstag und Bekanntmachung des Hinweises auf die Patenterteilung:
**27.05.2026   Patentblatt 2026/22**

(21) Anmeldenummer: **21725399.6**

(22) Anmeldetag: **23.04.2021**

(51) Internationale Patentklassifikation (IPC):
*H02P 21/14* *(2016.01)*    *H02P 21/00* *(2016.01)*
*H02P 21/13* *(2006.01)*    *H02P 21/20* *(2016.01)*
*H02P 27/024* *(2016.01)*    *H02P 1/26* *(2006.01)*

(52) Gemeinsame Patentklassifikation (CPC):
**H02P 21/141; H02P 1/26; H02P 21/0017; H02P 21/13; H02P 21/20; H02P 27/024**

(86) Internationale Anmeldenummer:
**PCT/EP2021/060625**

(87) Internationale Veröffentlichungsnummer:
**WO 2021/239344 (02.12.2021 Gazette 2021/48)**

(54) **VERFAHREN ZUM STARTEN UND STOPPEN EINES ASYNCHRONMOTORS**

METHOD FOR OPERATING AN ASYNCHRONOUS MOTOR

PROCÉDÉ DE FONCTIONNEMENT D'UN MOTEUR ASYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2020 EP 20176295**

(43) Veröffentlichungstag der Anmeldung:
**08.02.2023   Patentblatt 2023/06**

(73) Patentinhaber: **Siemens Aktiengesellschaft**
**80333 München (DE)**

(72) Erfinder:
• **NANNEN, Hauke**
  **90443 Nürnberg (DE)**
• **ZATOCIL, Heiko**
  **90469 Nürnberg (DE)**

(74) Vertreter: **Siemens Patent Attorneys**
**Postfach 22 16 34**
**80506 München (DE)**

(56) Entgegenhaltungen:
EP-A1- 2 571 157          EP-B1- 1 240 712
DE-A1- 102004 046 966     DE-T2- 69 021 187

• CHOI WOO JIN ET AL: "A novel MPC-SVM strategy for direct torque flux control of an induction motor drive system using a matrix converter", 2014 IEEE INTERNATIONAL CONFERENCE ON INDUSTRIAL TECHNOLOGY (ICIT), IEEE, 26 February 2014 (2014-02-26), pages 181 - 186, XP032639917, DOI: 10.1109/ICIT.2014.6894935
• ARSHAD M H ET AL: "Weighting Factors Optimization of Model Predictive Torque Control of Induction Motor Using NSGA-II With TOPSIS Decision Making", IEEE ACCESS, vol. 7, 5 September 2016 (2016-09-05), pages 177595 - 177606, XP011762501, DOI: 10.1109/ACCESS.2019.2958415
• MARCEL BENECKE: "Anlauf von energieeffizienten Synchronmaschinen mit Drehstromsteller", 6 September 2012 (2012-09-06), XP055392434, Retrieved from the Internet <URL:http://d-nb.info/1054135258/34> [retrieved on 20170720]

• **LEUER MICHAEL ET AL: "Model predictive control strategy for multi-phase thyristor matrix converters - Advantages, problems and solutions", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5 September 2016 (2016-09-05), pages 1 - 10, XP032985067, DOI: 10.1109/ EPE.2016.7695350**

**Beschreibung**

Die Erfindung betrifft ein Verfahren zum Starten und Stoppen eines Asynchronmotors. Ebenso betrifft die Erfindung einen Sanftstarter. Gleichermaßen betrifft die Erfindung ein Computerprogrammprodukt, mit dem das Verfahren durchführbar ist.

Als Sanftstarter, Softstarter oder Sanftanlaufgeräte werden Geräte bezeichnet, die über einen leistungselektronischen Stelleingriff mittels Thyristoren verfügen. Mittels dieser Thyristoren kann beim Einsatz von herkömmlichen Ansteuerverfahren die Netzspannung herabgesetzt werden, um einen verbesserten Start von Asynchronmotoren, kurz: ASM, auch Induktionsmotoren genannt, zu erreichen. Sanftstarter werden in verschiedenen Applikationen eingesetzt, unter anderem bei Pumpen und Lüftern in Industrieanwendungen. Sie machen immer dann Sinn, wenn die Hochlaufströme von Asynchronmotoren, die ca. das 6- bis 10-fache des Nennstroms betragen, reduziert werden sollen oder das Anlaufmoment eines startenden Asynchronmotors gesenkt werden soll, welches üblicherweise zumindest abschnittsweise deutlich größer als das Nennmoment ist. Sanftstarter greifen üblicherweise so lange ein, bis der entsprechende Motor seine Nenndrehzahl erreicht hat und somit der Startvorgang beendet ist. Häufig werden in industriellen Geräten, sobald der Startvorgang beendet ist, sogenannte Bypass-Kontakte zugeschaltet, die die Stromführung übernehmen und den ASM direkt mit dem Netz verbinden. Die Stromleitung über die Bypass-Kontakte hat den großen Vorteil, dass keine Verluste mehr in den Thyristoren entstehen.

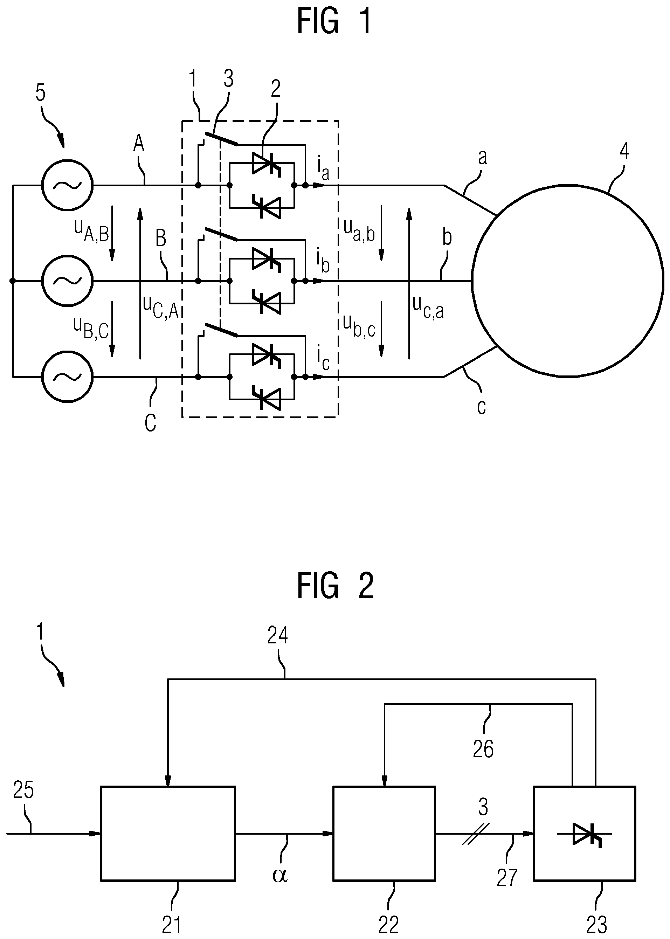

FIG 1 zeigt eine typische Sanftstartertopologie mit einem zwischen ein dreiphasiges elektrisches Netz 5 und einen Asynchronmotor 4 geschalteten Sanftstarter 1 zum Starten des ASM 4, mit je einem antiparallel geschalteten Paar von Thyristoren 2 und je einem Bypass-Kontakt 3 pro Phase a, b, c. Der Strom $i_a$, $i_b$, $i_c$ wird motorseitig in allen Phasen a, b, c gemessen. Zusätzlich nutzt der Sanftstarter 1 netzseitige Leitungs-zu-Leitungs-Messungen $u_{A,B}$, $u_{B,C}$, $u_{C,A}$, um die Netzspannungen $u_A$, $u_B$, $u_C$, und motorseitige Leitungs-zu-Leitungs-Messungen $u_{a,b}$, $u_{b,c}$, $u_{c,a}$, um die Motorspannungen $u_a$, $u_b$, $u_c$ zu berechnen. Ähnliche Topologien, bei denen allerdings nur zwei von drei Netzphasen im Sanftstarter schaltbar sind, findet man z. B. in dem Siemens-Gerätehandbuch Sanftstarter SIRIUS 3RW50, Siemens AG, Amberg, 09/2019, A5E35628455001A/RS-AA/001, Kapitel A.1.

Zwar wurde der Funktionsumfang von Sanftstartern in den letzten Jahrzehnten immer weiter vergrößert, z. B. durch Spannungsrampe, strombegrenzten Betrieb, drehmomentgeregelten Hochlauf und drehzahl-geregelten Hochlauf, allerdings ist die Struktur zur Generierung von Ansteuerimpulsen in den wesentlichen Grundzügen gleichgeblieben und hat die in FIG 2 gezeigte Struktur, welche im Wesentlichen drei Blöcke umfasst, die im Folgenden erläutert werden:
In einem ersten Block des Sanftstarters, dem Controller 21, wird durch eine Reglerstruktur der Stellwert des Zündwinkels $\alpha$, auch Steuer- oder Ansteuerwinkel genannt, aus Messwerten 24 wie Statorstrom $I_{1,RMS}$, Statorspannung $U_{1,RMS}$ und/oder Rotordrehzahl n des Motors erzeugt. Der Zündwinkel $\alpha$ kann unter Berücksichtigung verschiedener Parameter 25 wie z. B. dem Motordrehmoment, dem maximalen Sollstrom oder einer Drehzahlrampe so beeinflusst werden, dass das Verhalten für die Applikation optimal wird. Der Zündwinkel $\alpha$ definiert den RMS-Wert der an den einzelnen Phasen a, b, c des Motors anliegenden Spannungen (RMS = Root-Mean-Square). Eine einfache Art, einen Zündwinkel $\alpha$ zu generieren, ist eine Spannungsrampe, unabhängig von der Lastreaktion; dazu wird der Zündwinkel $\alpha$ einfach als Funktion der Zeit vergrößert. Dabei muss mit einem ausreichend großen Anfangswert des Zündwinkels $\alpha$ begonnen werden, damit das anfängliche Motordrehmoment $M_M$ bereits größer als das Lastdrehmoment $M_L$ ist; andernfalls würde der Motorstrom den Rotor nicht beschleunigen und im Stillstand nur hohe Verluste erzeugen, bis das Motordrehmoment hoch genug ist, um den Rotor zu beschleunigen.

Ein zweiter Block 22 des Sanftstarters dient der Generierung von Auslösesignalen 27 zum Auslösen von Thyristorzündungen, wobei die Auslösesignale 27 auf Basis der gemessenen Netzspannung 26 erzeugt werden.

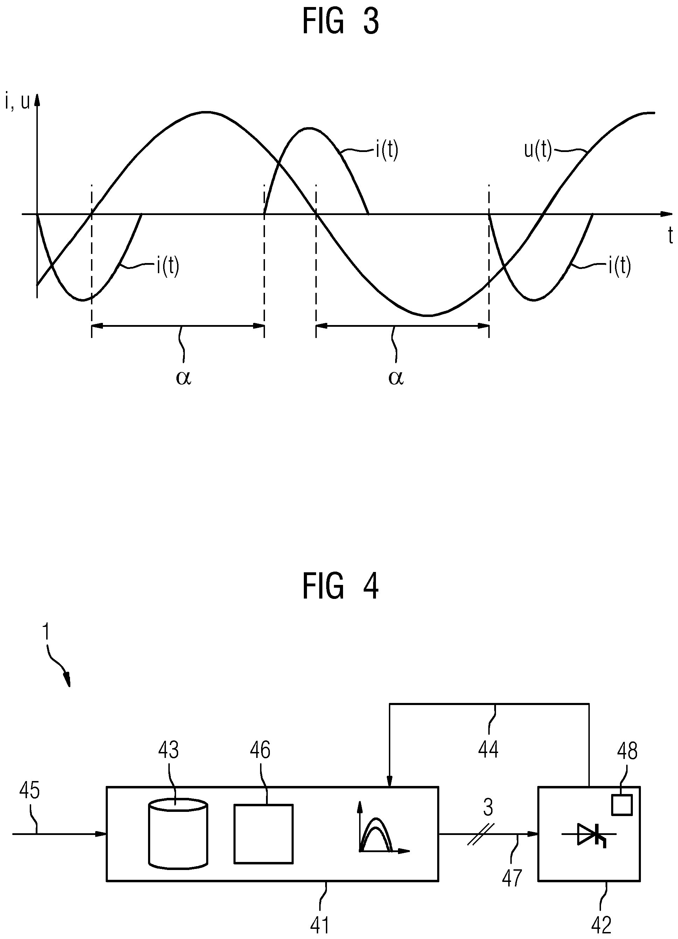

FIG 3 zeigt die Beziehung zwischen der über dem Thyristor anliegenden Spannung u, dem durch den Thyristor fließenden Strom i und dem Zündwinkel $\alpha$ als Funktion der Zeit t. Der herkömmliche Sanftstarter-Algorithmus nutzt das Prinzip der Spannungsreduktion zum Starten von ASM. Aus einem Zündwinkel $\alpha$ wird durch kontinuierliches Zünden der Thyristoren mit dem gleichen Zündwinkel eine Herabsetzung der Netzspannung erreicht. Diese Reduktion der Netzspannung führt näherungsweise zu einer proportionalen Reduktion des Anlaufstroms:

$$I_{1,RMS} \sim U_{1,RMS} \qquad (1)$$

Der Statorstrom $I_{1,RMS}$ des Motors, kurz: Motorstrom, nimmt proportional zu der angelegten Motorspannung $U_{1,RMS}$ ab. Da das Motordrehmoment $M_M$ näherungsweise quadratisch vom Motorstrom $I_{1,RMS}$ abhängt, erfolgt auch beim Motordrehmoment $M_M$ eine deutliche Reduktion, selbst bei geringeren Absenkungen der Motorspannung $U_{1,RMS}$:

$$M_M \sim I_{1,RMS}^2 \sim U_{1,RMS}^2 \qquad (2)$$

Ein dritter Block 23 des Sanftstarters umfasst die Thyristoren und Zündvorrichtungen, z. B. eine Zündsignaleinheit; er benutzt die vom zweiten Block 22 empfangenen Zündsignale zum Generieren der Ausgangsspannung.

Ein herkömmlicher Sanftstarter-Algorithmus nutzt stationäre Werte zum Steuern, z. B., des Motorstroms $I_{1,RMS}$. Alle Betrachtungen basieren auf der Annahme, dass sich das System mehr oder weniger in einem stationären Zustand befindet und der Schlupf sich über die Zeit verändert.

Problematisch beim Hochlauf eines Asynchronmotors am Sanftstarter sind die Verluste. Zum einen entstehen durch die Thyristoren Verluste innerhalb des Geräts. Dies erfordert eine gute Kühlung, insbesondere der Thyristoren im Gerät. Andererseits entstehen während des Hochlaufs erhöhte Verluste im Motor. Diese sind deutlich größer als die üblichen Motorverluste im Nennbetrieb. Diese beiden Faktoren führen dazu, dass die Anzahl der Starts, die nacheinander ausgeführt werden dürfen, begrenzt ist.

CHOI WOO JIN ET AL: "A novel MPC-SVM strategy for direct torque flux control of an induction motor drive system using a matrix converter", 2014 IEEE INTERNATIONAL CONFERENCE ON INDUSTRIAL TECHNOLOGY (ICIT), IEEE, 26. Februar 2014 (2014-02-26), Seiten 181-186, XP032639917, 001: 10.1109/ ICIT.2014.6894935, beschreibt ein Verfahren zur Drehmoment- und Flussregelung eines Induktionsmotors mittels einer modellprädiktiv geregelten Raumzeigermodulation (engl.: model predictive control space vector modulation, MPC-SVM). Dabei werden neun bidirektionale Schaltelemente eines 3-phasigen Matrixkonverters (engl.: matrix converter, MC) zu geeigneten Zeitpunkten elektrisch leitend (engl.: opened) oder sperrend (engl.: closed) geschaltet, um gewünschte Spannungen in den drei Phasen zu erzeugen.

EP 1 240 712 B1 (SIEMENS AG [DE]) 24. September 2003 (2003-09-24) beschreibt ein Verfahren, mit dem geeignete Zündzeitpunkte eines Drehstromstellers zum Betrieb eines Asynchronmotors aufgefunden werden können. Dabei wird allein mittels eines Drehstromstellers mit drei oder zwei Paaren antiparalleler Thyristoren ein Betrieb einer Asynchronmaschine mit beliebigen Grundwellen erzeugt. Ein weiterer prädiktiver Drehstromsteller ist in EP 2 571 157 A1 offenbart.

Der Erfindung liegt daher die Aufgabe zugrunde, die bei einem Hochlauf eines an einem Sanftstarter angeschlossenen Asynchronmotors auftretenden Verluste zu reduzieren.

Die Aufgabe wird gelöst durch ein Verfahren gemäß Anspruch 1. Die Aufgabe wird außerdem gelöst durch einen Sanftstarter gemäß Anspruch 9. Die Aufgabe wird außerdem gelöst durch ein Computerprogrammprodukt gemäß Anspruch 10.

Das erfindungsgemäße Verfahren dient zum Starten und Stoppen eines Asynchronmotors mittels eines Sanftstarters. Der Sanftstarter ist in die elektrische Versorgungsleitung zwischen einem elektrischen Netz zur Versorgung eines ASM mit elektrischer Energie und den ASM geschaltet, wobei der Sanftstarter in den schaltbaren Phasen, vorzugsweise in zwei oder drei Phasen der Versorgungsleitung, in Antiparallelschaltung angeschlossene Thyristoren aufweist, so dass der Sanftstarter als Stromsteller arbeiten kann. Das Starten eines Asynchronmotors wird auch als Hochlauf oder Anlassen bezeichnet; man bezeichnet damit die Phase zwischen dem Stillstand des Motors und dem Zeitpunkt, zu dem der Motor seine Nenndrehzahl erreicht. Das Stoppen eines Asynchronmotors ist der dem Starten entgegengesetzte Vorgang: man bezeichnet damit die Phase zwischen einem Zeitpunkt, zu dem der Motor zum letzten Mal mit seiner Nenndrehzahl rotiert, und dem Stillstand des Motors. In beiden Phasen findet eine Beschleunigung des Motors statt: beim Starten eine positive Beschleunigung (Zunahme der Rotationsgeschwindigkeit) und beim Stoppen eine negative Beschleunigung (Abnahme der Rotationsgeschwindigkeit). Das erfindungsgemäße Verfahren ist für beide Vorgänge, Starten und Stoppen, geeignet.

Das Verfahren weist einen ersten Schritt auf, in dem für einen in der Zukunft liegenden Berechnungszeitpunkt Möglichkeiten, einen oder mehrere Thyristoren des Sanftstarters zu zünden, ermittelt werden. Der in der Zukunft liegenden Berechnungszeitpunkt kann auch ein Zeitraum oder Zeitabschnitt sein, in dem eine Zündung eines oder mehrerer Thyristoren des Sanftstarters erfolgen kann. Möglichkeiten, einen oder mehrere Thyristoren des Sanftstarters zu zünden, werden auch als Zündmöglichkeiten oder Zündoptionen bezeichnet. Die im Sanftstarter verwendeten Thyristoren haben die Eigenschaft, dass man sie zwar einschalten, d. h. zünden, aber nicht wieder ausschalten kann. Sie gehen erst wieder in den stromsperrenden Zustand über, wenn der Strom einen Nulldurchgang aufweist. Dies führt dazu, dass eine durchgeführte Zündung üblicherweise den Strom über einen Zeitraum von mehreren Millisekunden festlegt. Somit kann die Anzahl der Zündmöglichkeiten dadurch eingeschränkt sein, dass zum Berechnungszeitpunkt noch z. B. zwei Phasen einen Strom leiten, der aufgrund einer Zündung zu einem früheren Zeitpunkt noch im System fließt. Dann reduziert sich bei einer 3-phasigen Netztopologie die Anzahl der Zündmöglichkeiten auf eine, da nur die dritte Phase "dazugezündet" werden kann.

Das Verfahren weist einen weiteren Schritt auf, in dem für die ermittelten Zündmöglichkeiten das elektrische und/oder mechanische Motorverhalten, wenn eine Zündung eines oder mehrerer Thyristoren des Sanftstarters durchgeführt würde, vorhergesagt wird. Für die aus der Topologie abgeleiteten Zündmöglichkeiten wird mittels eines Motormodells die Vorhersage des sich ergebenden Verhaltens durchgeführt. Dazu kann der angeschlossene ASM mittels eines transienten Motormodells modelliert werden.

Das Verfahren weist einen weiteren Schritt auf, im dem auf Basis des vorhergesagten elektrischen und/oder mechanischen Motorverhaltens entschieden wird, ob und welche Zündmöglichkeit gewählt werden soll. Es ist möglich, dass unter Berücksichtigung des vorhergesagten Motorverhaltens und von Entscheidungskriterien im Verfahren entschieden wird, dass keine der ermittelten Zündmöglichkeiten gewählt werden soll. Dann wird zu dem Berechnungszeitpunkt, für den keine Zündmöglichkeiten gewählt wurde, keine Zündung vorgenommen. Stattdessen können für einen späteren Berechnungszeitpunkt, vorzugsweise für einen unmittelbar folgenden Berechnungszeitpunkt, die Zündmöglichkeiten ermittelt werden, d. h. es kann sich ein erneuter Durchlauf des Verfahrens, beginnend beim ersten Schritt, anschließen.

Und das Verfahren weist einen weiteren Schritt auf, in dem, falls die Entscheidung für eine Zündmöglichkeit getroffen wurde, ein oder mehrere Zündsignale für den Sanftstarter erzeugt werden. An diesen Schritt kann sich ein erneuter Durchlauf des Verfahrens, beginnend beim ersten Schritt, anschließen.

Wie in der Einleitung erläutert, hat sich die Ansteuerung, insbesondere die Pulsgenerierung, in Sanftstartern in den letzten Jahrzehnten wenig verändert. Hier setzt die Erfindung an: Statt die vorhandene Struktur zur Erzeugung von Zündsignalen zu verwenden, kommt eine neue Struktur zum Einsatz, die nicht mittels Zündwinkels arbeitet und auch nicht auf eine kontinuierliche Ansteuerung der Thyristoren setzt.

Das neue Verfahren setzt auf einen modellprädikativen Ansatz zur Erzeugung von Zündsignalen für Sanftstarter: es werden zunächst alle im nächsten Zeitschritt möglichen Zündfälle, die sogenannten Zündmöglichkeiten, berechnet und danach für die Zündmöglichkeiten entschieden, ob sie nutzbar sind oder nicht. Statt also wie die herkömmlichen Verfahren auf eine kontinuierliche Zündung der Thyristoren, auf Mittelwerte und auf die Annahme von stationären Zuständen zu setzen, wird gemäß der Erfindung mittels eines Modells eine Vorhersage, d. h. eine Prädiktion, des transienten elektrischen und/oder mechanischen Motorverhaltens getroffen und anhand dieser eine Entscheidung über die Zündung gefällt. Die Betrachtungen des neuen Verfahrens sind situativ und legen keine durchschnittlichen Werte oder ein stationäres Verhalten zugrunde. Anschließend, direkt oder in einem festen zeitlichen Raster, wird das Verfahren wiederholt. Dieser Prädiktion wird vorzugsweise lediglich für die unmittelbar anstehenden Zündmöglichkeiten durchgeführt.

Die grundlegende Idee ist also, mithilfe eines Motormodells das elektrische und/oder mechanische Motorverhalten für alle Zündmöglichkeiten für mindestens einen nächsten Zeitschritt vorherzusagen. Dazu werden zur Initialisierung alle Zustandsvariablen des Systems gemessen und berechnet. Netzspannungen $u_A$, $u_B$, $u_C$ werden gemessen, um den Netzwinkel $\varphi_{grid}$ und die Netzspannungsamplitude $U_{grid}$ zu berechnen. Auch werden die Motorströme $i_a$, $i_b$, $i_c$ und Motorspannungen $u_a$, $u_b$, $u_c$ für eine modell-basierte Berechnung des verketteten Magnetflusses $\overrightarrow{\Psi}_2^{K}$ des Rotors, im Folgenden auch als Rotor-Magnetflussverkettung oder einfach als Rotor-Fluss bezeichnet, genutzt. Zusammen mit der gemessenen mechanischen Rotorgeschwindigkeit n und der Netzfrequenz $f_{grid}$ werden alle Systemvariablen definiert.

Diese Informationen werden dazu genutzt, alle Zündkombinationen zu berechnen, die im nächsten Zeitschritt mit dem Motormodell möglich sind, d. h. die sogenannten Zündmöglichkeiten. Im Falle einer 3-phasigen Netztopologie sind das Resultat bis zu vier berechnete Drehmoment- und Stromvarianten über die Zeit:

1.-3. zwei leitende Phasen (a und b, oder b und c, bzw. c und a)
4. drei leitende Phasen (a, b und c).

Die berechneten Resultate können unter verschiedenen Kriterien auf eine Überschreitung von Grenzwerten überprüft werden. Wenn es eine nutzbare Zündmöglichkeit gibt, generiert der Algorithmus Zündsignale, um das berechnete Resultat in die Realität umzusetzen.

Die Erfindung hat den Vorteil, dass die Verluste im Sanftstarter und im Induktionsmotor während des Startvorgangs verringert werden. Somit wird es möglich, mehr Starts pro Zeiteinheit durchzuführen, die Kühlung zu reduzieren und somit kleinere Sanftstarter zu bauen und, wenn eine Anwendung oft gestartet wird, Energie einzusparen.

Es gibt zwei wesentliche Schritte des neuen Verfahrens: Die Prädiktion und die Entscheidung.

Basis des Verfahrens ist die Prädiktion, d.h. eine Vorhersage. Die im Sanftstarter verwendeten Thyristoren haben die Eigenschaft, dass man sie zwar einschalten, d.h. zünden, aber nicht wieder ausschalten kann. Sie gehen erst wieder in den sperrenden Zustand über, wenn der Strom einen Nulldurchgang aufweist. Dies führt dazu, dass eine durchgeführte Zündung üblicherweise den Strom über einen Zeitraum von mehreren Millisekunden festlegt. Im Falle einer 50 Hz-Wechselspannung erfolgt alle 10 ms ein Nulldurchgang der Spannung. Eine weitere Einflussgröße ist die Kombination des zu zündenden Motorphasen. Grundsätzlich kann hier in zwei-phasige und drei-phasige Zündungen unterschieden werden. Bei der in FIG 1 dargestellten Sanftstartertopologie ergeben sich somit vier Zündmöglichkeiten:

1. Zündung der Phasen a und b,
2. Zündung der Phasen b und c,
3. Zündung der Phasen c und a,
4. Zündung der Phasen a, b und c.

Das hier beschriebene Vorgehen ist nicht auf die in FIG 1 dargestellte Topologie beschränkt. Sie bietet nur eine gute Basis zur Erklärung. Andere Topologien, auch für 2-phasige Sanftstarter, können grundsätzlich ebenfalls mit der hier beschriebenen Methodik betrieben werden, auch wenn im Detail Einflüsse auf die Leistungsfähigkeit zu erwarten sind. Auch andere Zusammenschaltungen von leistungselektronischen Schaltern wären möglich, z. B. Wurzel-3-Schaltung, Thyristorwendeschaltung. Letztlich muss hier nur die Betrachtung erfolgen, welche Thyristoren zusammen gezündet werden können, also welche Zündfälle sich ergeben. Diese können anschließend nach dem beschriebenen Verfahren prädiziert und bewertet werden. Die Methodik bleibt identisch.

Die Anzahl der Zündmöglichkeiten kann dadurch eingeschränkt sein, dass zum Berechnungszeitpunkt noch z. B. zwei Phasen einen Strom leiten, der aufgrund einer Zündung zu einem früheren Zeitpunkt noch im System fließt. Dann reduziert sich bei der hier dargestellten Topologie die Anzahl der Zündmöglichkeiten auf eine, da nur die dritte Phase "dazugezündet" werden kann.

Für die aus der Topologie abgeleiteten Zündmöglichkeiten wird mittels eines Modells eine Vorhersage des sich ergebenden Verhaltens durchgeführt. Dazu kann der angeschlossene Motor mittels eines transienten Motormodells modelliert werden.

Mittels der oben vorgestellten Gleichungssysteme kann das elektrische und/oder mechanische Motorverhalten vorhergesagt werden, allerdings müssen die Zustände des Modells initialisiert werden, bevor der weitere Verlauf berechnet werden kann. Das heißt, das Simulationsmodell muss in den aktuellen Zustand versetzt werden, aus dem die Vorhersage startet. Dazu müssen folgende Größen bestimmt werden:
Der Statorstrom kann einfach im Sanftstarter gemessen werden. Das Modell wird so mit dem aktuellen Stromwert initialisiert.

Der Rotorfluss kann im Gegensatz zum Statorstrom nicht einfach gemessen werden. Eine Messung des tatsächlichen Flusses im Rotor wird in der industriellen Praxis aufgrund der hohen Aufwände nahezu nie realisiert. Die gängigste Lösung ist die Verwendung eines Flussbeobachters oder Flussmodells. Mittels der gemessenen Motorströme oder/und Motorspannungen kann der Fluss im Motor rekonstruiert werden. Hierfür ist eine Vielzahl von Verfahren bekannt.

Neben dem Rotorfluss hat die Motordrehzahl einen entscheidenden Einfluss. Diese kann mittels eines Tachogenerators gemessen werden. Auch die Ermittlung der Drehzahl aus anderen gemessenen Größen wie z. B. Strom und Spannung ist möglich. Eine mögliche Umsetzung ist die Verwendung eines Flussbeobachters/-modells.

Der aktuelle Netzwinkel und die Amplitude der Netzspannung werden gemessen. Diese dienen als Startwert. Anschließend wird unter Zuhilfenahme der Netzfrequenz berechnet, wie sich die Netzspannung über die Zeitschritte der Prädiktion weiterentwickelt.

Damit sind alle Größen bekannt und das Modell kann initialisiert werden. Anschließend erfolgt die Berechnung der Zustandsgrößen der jeweiligen Zündmöglichkeiten so lange, bis ein Stromnulldurchgang eintritt.

Nach der Prädiktion ist klar, welche Möglichkeiten zur Zündung in der aktuellen Lage, d. h. welche Zündmöglichkeiten, bestehen. Diese können dann auf eine Vielzahl von Kriterien überprüft und bewertet werden. Folgende Entscheidungskriterien und entsprechende Kombinationen aus diesen sind denkbar:

1. Maximaler Statorstrom,
2. Maximaler Drehmomentpeak / maximale Drehmomentamplitude,
3. Minimale Leitzeit für Thyristoren (zum Sicherstellen von definierten Zündungen und Verhinderung von Fehlzündungen),
4. Minimales Durchschnittsdrehmoment,
5. Maximaler Rotorfluss,
6. Minimales Rotorflusswachstum durch die Zündung,
7. Thyristorverluste,
8. Motorverluste.

Diese Liste der möglichen Entscheidungskriterien ist nicht abschließend. Es können weitere Kriterien zur Entscheidungsfindung herangezogen werden, oder es können bestimmte der oben aufgezählten möglichen Entscheidungskriterien je nach der betrachteten Anwendung vernachlässigt oder unterschiedlich stark gewichtet werden.

Diese Entscheidungskriterien können entweder nach der Prädiktion oder während der Prädiktion, vor allem bei einfachen Schwellen wie Maximalstrom oder maximales Drehmoment, überprüft werden. Am Ende werden alle möglichen Zündfälle bewertet und entschieden, ob eine der Zündungen sinnvoll ist oder nicht. Erscheint keine der Möglichkeiten zielführend für das angestrebte Ziel, z.B. ein Beschleunigen des Motors, erfolgt keine Handlung und die nächste Iteration wird abgewartet.

Grundsätzlich kann mit dem Entscheidungskriterium das Verhalten des Systems direkt beeinflusst werden. Auch sind Betriebsarten denkbar, die mit heutigen Standardverfahren nicht möglich sind. Mittels einer geschickten Einflussnahme auf das maximale Drehmoment könnte eine Art Regelung aufgebaut werden, die eine rampenförmige Beschleunigung ermöglicht.

Das Gesamtverfahren aus Prädiktion und Entscheidung kann in einem festen oder in einem variablen Zeitraster verfolgt und somit der Motor weiter beschleunigt werden.

Vorteilhafte Ausgestaltungen und Weiterbildungen der Erfindung sind in den abhängigen Ansprüchen angegeben.

Gemäß einer bevorzugten Ausgestaltung der Erfindung erfolgt das Ermitteln von Zündmöglichkeiten für jeweils den nächsten Zeitschritt. Die Berechnungszeitpunkte können in einem festen Zeitraster liegen; dann folgen die Berechnungszeitpunkte in definierten, vorzugsweise gleichmäßigen, Zeitschritten aufeinander.

Gemäß einer bevorzugten Ausgestaltung der Erfindung wird das elektrische und/oder mechanische Motorverhalten mittels eines transienten Motormodells modelliert.

Gemäß einer bevorzugten Ausgestaltung der Erfindung erfolgt die Entscheidung, ob eine berechnete Zündoption gewählt werden soll, auf Basis einer oder mehrerer folgender Entscheidungskriterien: Maximaler Statorstrom, Maximales Drehmoment, Minimale Leitzeit für Thyristoren, Minimales Durchschnittsdrehmoment, Maximaler Rotorfluss, Minimales Rotorflusswachstum durch die Zündung, Thyristorverluste, Motorverluste.

Gemäß einer bevorzugten Ausgestaltung der Erfindung erfolgt zum unmittelbar nächsten Berechnungszeitpunkt keine Zündung, und die Vorhersage für einen Berechnungszeitpunkt, der auf den unmittelbar nächsten Berechnungszeitpunkt folgt, wird abgewartet, falls die Entscheidung getroffen wurde, dass keine Zündmöglichkeit sinnvoll ist.

Gemäß einer bevorzugten Ausgestaltung der Erfindung werden nur Zündmöglichkeiten ermittelt, die negative Drehmomente zur Folge haben und damit den Asynchronmotors aktiv bremsen.

Gemäß einer bevorzugten Ausgestaltung der Erfindung werden wiederholt ein aktueller Polradwinkel, eine aktuelle Rotordrehzahl, eine aktuelle Netzphasenlage und die aktuellen Statorphasenströme ermittelt, unter Verwendung des aktuellen Polradwinkels, der aktuellen Rotordrehzahl, der aktuellen Netzphasenlage und der aktuellen Statorphasenströme ein Drehmomentverlauf eines auf den Rotor wirkenden Drehmoments für erste Zündmöglichkeiten, in denen durch Zünden von Thyristoren zwei Phasen stromleitend geschaltet werden und für eine zweite Zündmöglichkeit, in dem durch Zünden von Thyristoren drei Phasen stromleitend geschaltet werden, vorausberechnet, und unter Verwendung der vorausberechneten Drehmomentverläufe für jedes Thyristorpaar entschieden, ob es gezündet wird.

Gemäß einer bevorzugten Ausgestaltung der Erfindung werden eine oder mehrere Iterationen ausgelassen. Der Vorteil dabei ist, dass der berechnende Prozessor entlastet wird, falls er gerade mit anderen Tätigkeiten, z. B. Kommunikation, beschäftigt ist.

Gemäß einer bevorzugten Ausgestaltung der Erfindung werden eine oder mehrere Iterationen eingefügt, d. h. die Iterationsdichte erhöht, z. B. bei niedrigerer Prozessorlast oder wenigen Zündmöglichkeiten. Der Vorteil dabei ist, dass die Kapazität des Prozessors voll ausgeschöpft wird, um den Hochlauf zu optimieren.

Gemäß einer bevorzugten Ausgestaltung der Erfindung ist dem Schritt des Vorhersagens des elektrischen und/oder mechanischen Motorverhaltens ein Schritt der Magnetflusserzeugung im Rotor durch Zündungen der Thyristoren vorgeschaltet. In einem permanentmagneterregten Motor gilt grundsätzlich, dass der Rotormagnetfluss, auch einfach als Rotorfluss bezeichnet, der zwingend zur Drehmomentbildung des Motors benötigt wird, durch Permanentmagneten erzeugt wird. Dieser Rotorfluss ist fest in seiner Amplitude und auch fest bezüglich der mechanischen Position auf dem Rotor. Beim Asynchronmotor hingegen ist bei einem stillstehenden Motor zunächst kein Fluss im Motor vorhanden. Zunächst handelt es sich beim Rotor nur um ein Konstrukt aus Elektroblech, Aluminium und optional Kupfer. Also muss zunächst Magnetfluss, auch einfach als Fluss bezeichnet, in die Maschine gebracht werden, da dieser maßgebliche Einfluss auf das durch den Asynchronmotor erzeugbare Drehmoment hat: Hierzu wird durch ein oder vorzugsweise mehrere Strompulse gezielt Fluss in den Motor gebracht, um anschließend den Motor beschleunigen zu können. Es ist beim Asynchronmotor also erforderlich, den Fluss im Motor zunächst selbst einzubringen. Gleichzeitig ist die Entscheidung, ob eine Zündung sinnvoll ist, nicht mehr nur von der Frage geprägt, ob Drehmoment- oder Stromgrenzen überschritten werden, sondern auch davon, wie der Fluss im Motor durch die Zündung beeinflusst wird. Bringt also eine Zündung besonders viel Drehmoment, sorgt aber dafür, dass der Fluss im Motor absinkt, hat man zwar kurzfristig einen Erfolg erlangt, aber zu dem Preis, dass danach in der nächsten Zündung nur noch ein reduziertes oder relativ kleines Drehmoment erzielt werden kann, da der Rotorfluss relativ klein ist. In der Entscheidung muss also berücksichtigt werden, ob die Zündung, die man aufgrund von Strom- und Drehmomentverläufen wählen würde, auch bezüglich der Magnetisierung des Motors sinnvoll ist. Dies kann im Entscheidungskriterium z. B. durch Grenzen für "Maximaler Rotorfluss", "Minimalen Rotorfluss" oder "Mindestzuwachs des Rotorflusses während einer Zündung" Berücksichtigung finden.

Es ist möglich, dass ein magnetisierter Läufer, also ein Magnetfluss im Rotor des Motors, durch zweiphasige Zündungen in immer der gleichen Netzphasenlage, d. h. bei dem immer gleichen Netzwinkel, erzeugt wird. Diese zweiphasigen Zündungen haben einen pulsierenden Stromraumzeiger zur Folge, der einen Magnetfluss in einer fest definierten Richtung im Rotor einprägt. Ein solcher Zeitabschnitt der Rotorflusserzeugung wird dem eigentlichen Startvorgang vorgeschaltet, um mit einem magnetisierten Motor starten zu können.

Ein weiterer Unterschied zwischen einem permanentmagneterregten Motor und einem Asynchronmotor ist, dass beim Asynchronmotor, im Gegensatz zum permanentmagneterregten Motor, nicht mehr nur die Position, sondern auch die veränderliche Amplitude des Magnetflusses Berücksichtigung finden muss. Dies ist nötig, da auch die Amplitude von der vorherigen Bestromung abhängig ist. Daher ist auch ein Verfahren erforderlich, das nicht nur den Flusswinkel bestimmt, sondern den gesamten Flussvektor. Für die Bestimmung des Flusszeigers haben sich im Stand der Technik eine Vielzahl von Verfahren etabliert, den Rotorfluss in einem Asynchronmotor zu schätzen.

Die Tatsache, dass die Flusserhaltung in die Abwägung des Entscheidungskriteriums mit einbezogen werden muss, kann als zusätzlicher Freiheitsgrad vorteilhaft genutzt werden. So ist es zum Beispiel möglich, den Fluss von seiner momentanen, auf den Rotor bezogenen Position in eine andere Position zu drehen, wenn der außen angelegte Strom dies bewirkt. Das bedeutet, dass der Rotorfluss nicht mehr an bzw. in der Rotorposition fixiert ist, sondern sich auch ein Stück weit mitdrehen kann; dies ist übrigens der Grund, wieso der Motor am Netz immer knapp unter der synchronen Drehzahl, also asynchron, läuft.

Außerdem ist es möglich, den Rotorfluss durch gezielte Zündungen zu erhöhen oder abzusenken; somit kann der Hochlauf optimiert werden. Hält man z. B. den Fluss durch eine gezielte Beeinflussung des Entscheidungskriteriums hoch, so kann man sehr hohe Anlaufmomente, insbesondere im unteren Drehzahlbereich, erreichen. Andererseits ist es möglich, den Fluss auf einem relativ kleinen Wert zu halten, um die entsprechenden Rotorverluste möglichst niedrig zu halten. Dies kann z. B. bei Anwendungen wie Lüftern vorteilhaft sein. Hier bestehen im unteren Drehzahlbereich relativ niedrige Drehmomentanforderungen (quadratische Lastkennlinie); ein hoher Fluss zur Erzeugung von großen Drehmomenten wäre hier gar nicht erforderlich. Da durch die gezielte Reduktion der Rotorflusses weniger Verluste entstehen, sind mehr Starts pro Zeiteinheit möglich.

Die Aufgabe wird auch durch einen erfindungsgemäßen Sanftstarter gelöst. Der Sanftstarter weist eine Zündsignaleinheit zum Generieren von Zündsignalen und die Thyristoren auf. Die Zündsignaleinheit kann ausgelöst werden, Zündsignale für einen bzw. mehrere der Thyristoren zu generieren. Der Sanftstarter weist außerdem Mittel auf, die geeignet sind, die Schritte des beschriebenen Verfahrens auszuführen. Diese Mittel können z. B. eine Steuereinheit sein, welche eine Recheneinheit und eine Speichereinheit aufweist. In die Speichereinheit kann ein Computerprogramm geladen und dort dauerhaft gespeichert werden, von wo es zur Ausführung in die Recheneinheit geladen werden kann.

Die skizzierte Aufgabenstellung wird außerdem durch ein erfindungsgemäßes Computerprogrammprodukt sowie ein computerlesbares Medium, auf dem das Computerprogrammprodukt gespeichert ist, gelöst. Das Computerprogrammprodukt ist in zumindest einem Prozessor ausführbar ausgebildet. Das Computerprogrammprodukt kann als Software, z. B. als eine aus dem Internet herunterladbare App, oder als Firmware in einem Speicher speicherbar und durch einen Prozessor oder ein Rechenwerk ausführbar ausgebildet sein. Alternativ oder ergänzend kann das Computerprogrammprodukt auch zumindest teilweise als festverdrahtete Schaltung ausgebildet sein, beispielsweise als ein ASIC (ASIC = Application-Specific Integrated Circuit). Das erfindungsgemäße Computerprogrammprodukt umfasst Befehle, die bewirken, dass der erfindungsgemäße Sanftstarter die Verfahrensschritte des beschriebenen Verfahrens ausführt. Das Computerprogrammprodukt ist also dazu ausgebildet, das Verfahren zum Betreiben eines Asynchronmotors mittels eines Sanftstarters durchzuführen. Insbesondere ist es dazu ausgebildet, den Schritt Ermitteln von zu einem in der Zukunft liegenden Berechnungszeitpunkt möglichen Zündmöglichkeiten eines oder mehrerer Thyristoren des Sanftstarters durchzuführen. Außerdem ist es dazu ausgebildet, den Schritt Vorhersage des elektrischen und/oder mechanischen Motorverhaltens, wenn eine Zündung eines oder mehrerer Thyristoren des Sanftstarters durchgeführt würde, für die ermittelten Zündmöglichkeiten auszuführen. Außerdem ist es dazu ausgebildet, den Schritt Entscheiden auf Basis des vorhergesagten Motorverhaltens, ob und welche Zündmöglichkeit gewählt werden soll auszuführen Außerdem umfasst das Computerprogrammprodukt Befehle, die bewirken, dass die Zündsignaleinheit des erfindungsgemäßen Sanftstarters ein oder mehrere Zündsignale für einen bzw. mehrere Thyristoren erzeugt, falls die Entscheidung für eine Zündmöglichkeit getroffen wurde. Erfindungsgemäß ist das Computerprogrammprodukt dazu ausgebildet, mindestens eine Ausführungsform des skizzierten Verfahrens umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. So kann das Computerprogrammprodukt teilweise in einer Steuereinheit des Sanftstarters und teilweise in einer externen Steuereinheit ausführbar ausgebildet sein. Außerdem kann ein Teil des Verfahrens in einem Sanftstartergerät durchgeführt werden und ein anderer Teil des Verfahrens in einer dem Sanftstartergerät übergeordneten Steuereinheit, wie beispielsweise einer SPS, einem Handparametriergerät oder einer Computer-Cloud.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 4     einen Sanftstarter gemäß einer Ausgestaltung der Erfindung;

FIG 6a    einen Hochlauf mit dem herkömmlichen Startalgorithmus mit einem konstanten Lastdrehmoment $M_L$ von 30 Nm;

FIG 6b    einen Hochlauf mit einer Ausführungsform des erfindungsgemäßen prädikativen Startalgorithmus mit einem konstanten Lastdrehmoment $M_L$ von 30 Nm;

FIG 7a    einen Hochlauf mit dem herkömmlichen Startalgorithmus mit einem konstanten Lastdrehmoment $M_L$ von 70 Nm;

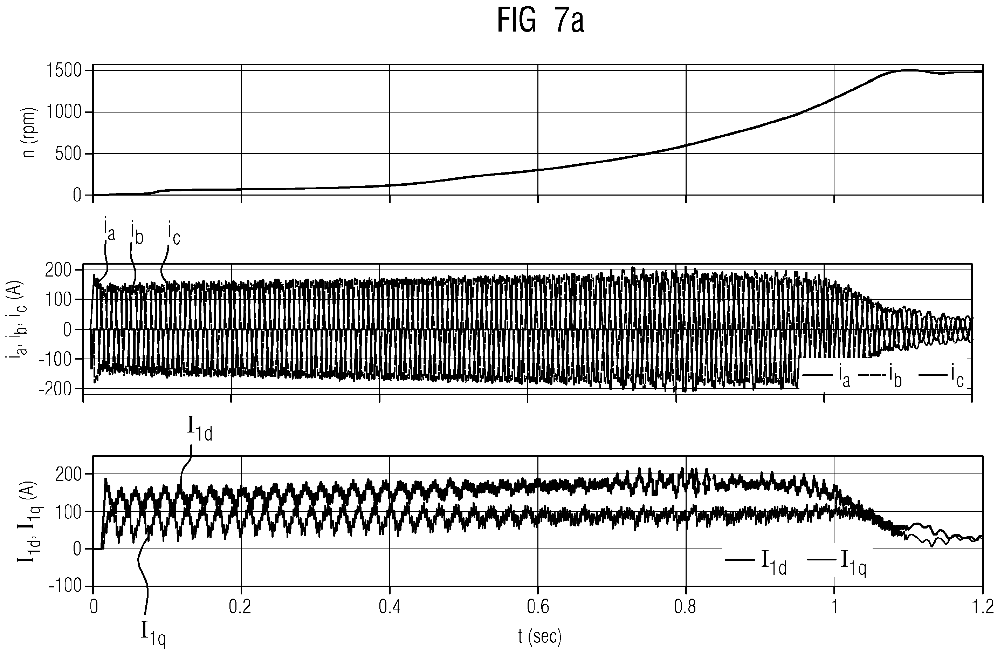

FIG 7a    einen Hochlauf mit einer Ausführungsform des erfindungsgemäßen prädikativen Startalgorithmus mit einem konstanten Lastdrehmoment $M_L$ von 70 Nm; und

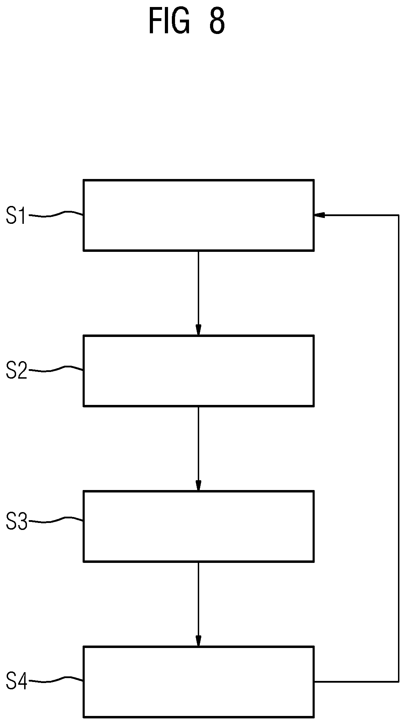

FIG 8    ein Ablaufdiagramm gemäß einer Ausführungsform des erfindungsgemäßen Verfahrens.

FIG 4 zeigt die Struktur eines Sanftstarters 1 gemäß einer Ausgestaltung der Erfindung. Der Sanftstarter 1 kann zum Beispiel in einer Topologie, wie sie in FIG 1 gezeigt ist, eingesetzt werden. Der Sanftstarter 1 weist eine Steuerungseinheit 41 mit einer Recheneinheit 46, auch als Prozessor bezeichnet, und einer Speichereinheit 43 auf. Die Recheneinheit 46 führt ein in der Speichereinheit 43 abgelegtes Computerprogramm, welches einen Algorithmus zur Ausführung des Verfahrens enthält, aus. Bei Ausführung des Algorithmus werden Zündmöglichkeiten für mindestens einen nächsten Zeitschritt ermittelt, mithilfe eines Motormodells das zu den Zündmöglichkeiten korrespondierende elektrische und/oder mechanische Motorverhalten vorherberechnet und schließlich auf Basis des vorhergesagten Motorverhaltens eine Entscheidung getroffen, ob und welche Zündmöglichkeit gewählt werden soll. Zur Initialisierung des Algorithmus werden Zustandsvariablen des Systems gemessen bzw. berechnet. Die Recheneinheit 46 erhält eine Reihe von Messwerten 44, z. B. den Motorstrom $I_{1,RMS}$, die Motorspannung $U_{1,RMS}$ und die Drehzahl n des Rotors, als Eingangswerte. Netzspannungen $u_A$, $u_B$, $u_C$ werden gemessen, um den Netzwinkel $\varphi_{grid}$ und die Netzspannungsamplitude $U_{grid}$ zu berechnen. Auch werden die Motorströme $i_a$, $i_b$, $i_c$ und Motorspannungen $u_a$, $u_b$, $u_c$ für eine modell-basierte Berechnung des Rotor-Flusses genutzt. Zusammen mit der gemessenen mechanischen Rotorgeschwindigkeit n und der Netzfrequenz $f_{grid}$ werden alle Systemvariablen definiert. Nach der Prädiktion steht fest, welche Möglichkeiten zur Zündung zu dem betrachteten Zeitpunkt in der Zukunft, d. h. welche Zündmöglichkeiten, bestehen. Diese Zündmöglichkeiten können dann auf eine Vielzahl von Entscheidungskriterien 45, z. B. ein maximales Drehmoment oder einen maximalen Statorstrom, überprüft und bewertet werden. Falls die Entscheidung für eine bestimmte Zündmöglichkeit getroffen wurde, generiert die Steuerung 41 ein oder mehrere Auslösesignale 47 an einen Zünd-Block 42 des Sanftstarters, der Thyristoren und eine Zündsignaleinheit 48 zum Generieren von Zündsignalen für die Thyristoren aufweist. Die Auslösesignale 47 veranlassen die Zündsignaleinheit 48, Zündsignale für einen bzw. mehrere Thyristoren zu generieren, so dass sich das vorberechnete Motorverhalten einstellt.

Im Folgenden wird als ein Ausführungsbeispiel des erfindungsgemäßen Verfahrens ein Standardmodell für Induktionsmotoren zur Prädiktion verwendet. Grundsätzlich sei hier darauf hingewiesen, dass es keinesfalls zwangsläufig das hier dargestellte Motormodell sein muss, mit dem das Verhalten des Motors prädiziert wird. Vereinfachte Modelle, die z. B. Faktoren wie Streuflüsse vernachlässigen, Stromverdrängungseffekte im Rotor berücksichtigen oder andere Größen als Zustandsgrößen aufweisen, sind selbstverständlich hier ebenfalls anwendbar. Für die Berechnung von zweiphasigen Zündungen müssen die Modellzustände geeignet verdreht oder die fehlende dritte Leiterspannung separat berechnet werden.

Der tiefgestellte Index 1 zeigt an, dass ein Wert ein Stator-Parameter ist, der tiefgestellte Index 2, dass ein Wert ein Rotor-Parameter ist. Der hochgestellte Index K zeigt an, dass ein Wert im Bezugssystem um den Rotationswinkel $\varphi_K$ gedreht wurde:

$$\vec{I}_1^K \quad = \quad \vec{I}_1^S \cdot e^{-j\varphi_K} \qquad (3)$$

Das Motormodell umfasst den Statorwiderstand $R_1$, die Stator-Leckinduktivitäten $L_{1\sigma}$, die gegenseitige Induktanz $L_h$, den Rotorwiderstand $R_2$, und die Rotor-Leckinduktivitäten $L_{2\sigma}$. Der Einfachheit halber werden die Rotorparameter auf die Statorseite bezogen. Die elektrische Rotorgeschwindigkeit ist definiert als $\Omega_L$, die Rotationsgeschwindigkeit des Bezugssystems als $\Omega_K$. Die Induktivitäten sind definiert als:

$$L_1 \quad = \quad L_{1\sigma} + L_h \qquad (4)$$

$$L_2 \quad = \quad L_{2\sigma} + L_h \qquad (5)$$

Gleichungen (6) und (7) zeigen ein Modell eines allgemeinen Induktionsmotors, basierend auf der Rotor-Magnetflussverkettung $\vec{\Psi}_2^K$ und der Stator-Magnetflussverkettung $\vec{\Psi}_1^K$ als Zustandsvariablen:

$$\vec{U}_1^K \;=\; R_1 \cdot \vec{I}_1^K + \frac{d\vec{\Psi}_1^K}{dt} + j \cdot \Omega_K \cdot \vec{\Psi}_1^K \qquad (6)$$

$$\vec{U}_2^K \;=\; R_2 \cdot \vec{I}_2^K + \frac{d\vec{\Psi}_2^K}{dt} + j \cdot (\Omega_K - \Omega_L) \cdot \vec{\Psi}_2^K \qquad (7)$$

Die Magnetflussverkettung kann auf Basis der Stator- und Rotorströme berechnet werden:

$$\vec{\Psi}_1^K \;=\; L_1 \cdot \vec{I}_1^K + L_h \cdot \vec{I}_2^K \qquad (8)$$

$$\vec{\Psi}_2^K \;=\; L_h \cdot \vec{I}_1^K + L_2 \cdot \vec{I}_2^K \qquad (9)$$

Das Motordrehmoment ist definiert als:

$$M_M \;=\; \frac{3}{2} \cdot p \cdot \vec{\Psi}_1^K \times \vec{I}_1^K \qquad (10)$$

Unter der Annahme eines Käfigläufer-Induktionsmotors kann man einen Kurzschluss auf der Rotorseite ansetzen:

$$\vec{U}_2^K \;=\; 0 \qquad (11)$$

Außerdem bringt es keinen Vorteil, für prädiktive Berechnungen den Bezugsrahmen kontinuierlich zu drehen, wie dies oft in der Motorsteuerung getan wird. Deshalb wird die Rotationsgeschwindigkeit des Bezugssystems gleich Null gesetzt:

$$\frac{d\varphi_K}{dt} \;=\; \Omega_K \;=\; 0 \qquad (12)$$

Für eine kompakte Beschreibung des Modells ist es außerdem nützlich, den Streuziffer $\sigma$ zu definieren:

$$\sigma \;=\; 1 - \frac{L_h^2}{L_1 \cdot L_2} \qquad (13)$$

Aus Gleichung (9) folgt:

$$\vec{I}_2^K \;=\; -\frac{L_h}{L_2} \cdot \vec{I}_1^K + \frac{1}{L_2} \cdot \vec{\Psi}_2^K \qquad (14)$$

In den Gleichungen (6) und (7) sind die Rotor-Magnetflussverkettung $\vec{\Psi}_2^K$ und die Stator-Magnetflussverkettung $\vec{\Psi}_1^K$ als Zustandsvariablen definiert. Im Sanftstarter gemäß FIG 1 werden nur die Statorströme gemessen. Diese Ströme sind eine Systemeigenschaft, die für die Initialisierung des Prädiktionsmodells notwendig ist. Um den Aufwand zur Berechnung des Magnetflusses basierend auf den gemessenen Strömen zu reduzieren, ist es vorteilhaft, den Strom-Raum-Vektor als eine Stator-Zustandsvariable zu haben. Daher werden die Gleichungen (6) und (9) verwendet, um den Statorstrom $\vec{I}_1^K$ als neue systemdynamische Zustandsvariable zu erhalten:

$$\frac{d\vec{I}_1^K}{dt} = \frac{1}{\sigma \cdot L_1} \cdot \vec{U}_1^K - \frac{R_1}{\sigma \cdot L_1} \cdot \vec{I}_1^K +$$

$$\frac{R_2 \cdot L_h}{\sigma \cdot L_1 \cdot L_2} \cdot \vec{I}_2^K - j \cdot \frac{\Omega_L}{\sigma \cdot L_1} \cdot \vec{\Psi}_2^K \qquad (15)$$

$$\frac{d\vec{\Psi}_2^K}{dt} = -R_2 \cdot \vec{I}_2^K + j \cdot \Omega_L \cdot \vec{\Psi}_2^K \qquad (16)$$

Um den Rechnungsaufwand zu reduzieren, wird Gleichung (14) in die Gleichungen (15) und (16) integriert:

$$\frac{d\vec{I}_1^K}{dt} = \frac{1}{\sigma \cdot L_1} \cdot \vec{U}_1^K - \frac{R_1 \cdot L_2^2 - R_2 \cdot L_h^2}{\sigma \cdot L_1 \cdot L_2^2} \cdot \vec{I}_1^K +$$

$$\frac{R_2 \cdot L_h}{\sigma \cdot L_1 \cdot L_2^2} \cdot \vec{\Psi}_2^K - j \cdot \frac{\Omega_L}{\sigma \cdot L_1} \cdot \vec{\Psi}_2^K \qquad (17)$$

$$\frac{d\vec{\Psi}_2^K}{dt} = \frac{R_2 \cdot L_h}{L_2} \cdot \vec{I}_1^K - \frac{R_2}{L_2} \cdot \vec{\Psi}_2^K + j \cdot \Omega_L \cdot \vec{\Psi}_2^K \quad (18)$$

Die Drehmomentgleichung (10) wird unter Benutzung der Gleichungen (8) und (9) zu den neuen System-Zustandsvariablen umgeformt:

$$M_M = \frac{3}{2} \cdot p \cdot \frac{L_h}{L_2} \cdot \vec{\Psi}_2^K \times \vec{I}_1^K \qquad (19)$$

Die Gleichungen (17), (18) und (19) repräsentieren das gesamte Systemmodell. Für einen 3-phasigen Zündfall kann dieses Modell verwendet werden, um das elektrische und mechanische Motorverhalten zu berechnen, indem die Netzspannung $\vec{U}_{grid}^S$ als Statorspannung $\vec{U}_1^K$ genommen wird.

Die Berechnung einer 2-phasigen Zündung basierend auf diesem Modell ist ebenfalls möglich, wobei aber zusätzlicher Aufwand betrieben werden muss. Wenn z.B. die Thyristoren in den Phasen a und b gezündet werden, muss die Spannung über den Thyristor in Phase c parallel gerechnet werden. Diese Berechnung muss die Bedingung $i_c = 0$ erfüllen, weil der Thyristor in Phase c noch immer den Strom sperrt. Daher wird die Berechnung noch zeitaufwändiger, weil die Spannung in jedem Prädiktionsschritt berechnet werden muss.

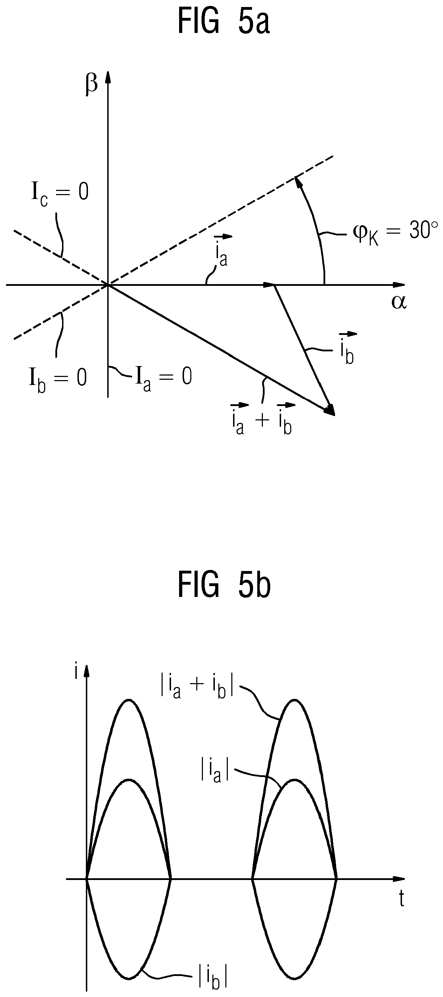

Um diesen Rechenaufwand zu reduzieren, kann folgender Ansatz gewählt werden. Wenn die Thyristoren in zwei der drei Netzphasen gezündet werden, werden sie stromleitend, wohingegen der Thyristor in der dritten Phase stromsperrend bleibt. Weil die Summe der Ströme in allen drei Phasen stets null sein muss, muss der Strom, der in einer der leitenden Phasen zum Motor hin fließt identisch zu dem Strom sein, der in der anderen leitenden Phase vom Motor weg fließt; daher sind die Stromstärken in den beiden leitenden Phasen exakt gleich, nur mit entgegengesetzten Vorzeichen. FIG 5a und FIG 5b betreffen eine 2-Phasen-Zündung der Phasen a und b. In FIG 5a ist in einem feststehenden α-β-Bezugsrahmen offensichtlich, dass diese Bedingung zu einem pulsierenden Stromvektor führt, der in der Länge variiert, aber nicht in der Richtung. Daher variiert nur der Absolutwert des Stromvektors $\left|\vec{I}_1^K\right|$. FIG 5b zeigt einen Graphen mit den Absolutwerten des generierten Stromvektors.

Falls die Richtung fest ist und nur der Absolutwert des Stromzustandsvektors variiert, ist es nicht mehr nötig, den Strom als eine komplexe Variable zu beschreiben. Indem alle Systemzustandsvariablen um einen Winkel $\varphi_P$, der von der Zündkombination abhängt, gedreht werden, können die Gleichungen vereinfacht werden. Für diese Rotation wird ein Prädiktionsbezugsrahmen mit dem Rotationswinkel $\varphi_P$ definiert:

$$\vec{I}_1^P = \vec{I}_1^S \cdot e^{-j\varphi_P} \qquad (20)$$

Die Systemgleichungen (17), (18) und (19) werden in dem Prädiktionsbezugsrahmen definiert wie folgt:

$$\frac{d\vec{I}_1^P}{dt} = \frac{1}{\sigma \cdot L_1} \cdot \vec{U}_1^K - \frac{R_1 \cdot L_2^2 - R_2 \cdot L_h^2}{\sigma \cdot L_1 \cdot L_2^2} \cdot \vec{I}_1^P + \frac{R_2 \cdot L_h}{\sigma \cdot L_1 \cdot L_2^2} \cdot \vec{\Psi}_2^P - j \cdot \frac{\Omega_L}{\sigma \cdot L_1} \cdot \vec{\Psi}_2^P \quad (21)$$

$$\frac{d\vec{\Psi}_2^P}{dt} = \frac{R_2 \cdot L_h}{L_2} \cdot \vec{I}_1^P - \frac{R_2}{L_2} \cdot \vec{\Psi}_2^P + j \cdot \Omega_L \cdot \vec{\Psi}_2^P \quad (22)$$

$$M_M = \frac{3}{2} \cdot p \cdot \frac{L_h}{L_2} \cdot \vec{\Psi}_2^P \times \vec{I}_1^P \quad (23)$$

Der Rotationswinkel $\varphi_P$ hängt von der Zündkombination in den Thyristoren ab. Für die drei möglichen 2-Phasen-Zündkombinationen:

    1. Zündung von Phase a und b
    2. Zündung von Phase b und c
    3. Zündung von Phase a und c

sind die Rotationswinkel $\varphi_P$ im Prädiktionsbezugsrahmen:

$$\varphi_{P,a-b} = \frac{1}{6}\pi, \quad \varphi_{P,b-c} = \frac{1}{2}\pi, \quad \varphi_{P,c-a} = -\frac{5}{6}\pi \quad (24)$$

Diese Methode hat einige Vorteile verglichen mit der Berechnung der dritten Spannung. Zum einen braucht die dritte zusätzliche Spannung der stromlosen Phase nicht für jeden Prädiktionsschritt berechnet zu werden. Zum anderen wird auch das Motormodell als solches einfacher, weil die Gleichung (17) nicht zweimal gelöst werden muss, einmal für den Realteil und einmal für den Imaginärteil. Wegen der Drehung um den konstanten Rotationswinkel $\varphi_P$ bleibt in Gleichung (17) für die Berechnung der 2-Phasen-Zündung nur der Realteil übrig. Im Fall, dass einer der Leitzustände eines der Thyristoren verändert wird, müssen die Zustände der Gleichungen (17) und (18) und der Netzeingangsspannungsvektor $\vec{U}_{grid}$ um den neuen Winkel $\varphi_P$ gedreht werden.

Für die Berechnung des elektrischen und mechanischen Motorverhaltens ist die eigentliche Rotor-Magnetflussverkettung $\vec{\Psi}_2^K$ als eine Zustandsvariable des Motors notwendig, siehe Gleichung (18). Weil die Messung der Rotor-Magnetflussverkettung $\vec{\Psi}_2^K$ mit einer üblichen Hardwareausrüstung eines Sanftstarters nicht möglich ist, ist ein Magnetflussmodell zur Berechnung der Rotor-Magnetflussverkettung erforderlich. Deshalb wird Gleichung (18) unter Nutzung der gemessenen Statorströme $\vec{I}_1^K$ als Eingangswert zum Verfolgen der Rotor-Magnetflussverkettung implementiert. Der Wert der Rotor-Magnetflussverkettung wird auch im nächsten Abschnitt zur Berechnung eines Drehmoments und eines Magnetflussgenerierungsstroms ($I_{1q}$ und $I_{1d}$) benutzt. Zusammen repräsentieren sie den Statorstromzustandsvektor, während $\varphi_K$ gleich dem Winkel von $\vec{\Psi}_2^P$ ist:

$$\vec{I}_1^K = I_{1q} + jI_{1d} \quad (25)$$

Mit diesem Ansatz kann die Drehmomentgleichung (10) vereinfacht werden:

$$M_M \quad = \quad \frac{3}{2} \cdot p \cdot \Psi_{1d} \cdot I_{1q} \qquad (26)$$

Bei allen Berechnungen wird angenommen, dass die Rotorgeschwindigkeit $\Omega_L$ bis zum Vorhersagehorizont konstant ist. Diese Annahme führt zu akzeptabel geringen Fehlern in der Vorhersage, weil die Massenträgheit von Motor und Last in den meisten Fällen groß genug sind, um die Rotorgeschwindigkeit bis zum Vorhersagehorizont von weniger als 20 ms stabil zu halten.

Im Schritt der Prädiktion werden alle Zündmöglichkeiten berechnet. Aus den unterschiedlichen Zündmöglichkeiten resultieren unterschiedliche zeitliche Verläufe des Drehmoments und der Ströme. Basierend auf diesen zeitlichen Verläufen und weiteren Entscheidungskriterien muss nun eine Entscheidung getroffen werden, ob eine bestimmte Zündmöglichkeit nützlich oder nicht ist.

Der Hauptgrund für die Verwendung eines Sanftstarters ist die dadurch mögliche Begrenzung von Strom und Drehmoment, so dass das Netz und die Anwendung durch den Motorstart nicht geschädigt werden. Daher sollten die Entscheidungskriterien eine maximale Stromamplitude $i_{p,max}$ und eine maximale Drehmomentamplitude $M_{p,max}$ einschließen. Zusätzlich stellt ein minimales mittleres Drehmoment $M_{p,avgmin}$ sicher, dass nur Zündmöglichkeiten akzeptiert werden, welche den Rotor beschleunigen. Wegen Totzeiten in der Zündhardware und Ungenauigkeiten in der Spannungsnulldurchgangserkennung ist es außerdem nützlich, eine minimale Leitzeit $t_{p,mc}$ für die Thyristoren zu definieren. Zündmöglichkeiten, bei denen die Leitung endet, bevor diese minimale Leitzeit $t_{p,mc}$ verstrichen ist, werden verworfen.

Zusätzlich ist es notwendig, die Amplitude der Rotor-Magnetflussverkettung $\left| \vec{\Psi}_2^K \right|$ auf einem nützlichen Niveau zu halten, um die Möglichkeit zu haben, mit den Statorströmen ein Drehmoment zu generieren. Dazu wird eine minimaler Wert für die Rotorflussverkettung $\Psi_{p,free}$ definiert, um ein bestimmtes Niveau an Magnetfluss im Rotor sicherzustellen. Unter diesem Niveau muss jede Zündung eine Steigerung des Rotor-Magnetflusses von $\Psi_{p,\Delta min}$ erbringen. Dadurch wird die Rotor-Magnetflussverkettung gesteigert, bis der minimale Wert für die Rotorflussverkettung $\Psi_{p,free}$ wieder erreicht ist. Mit diesen Regeln ist es möglich, den Induktionsmotor hochzufahren.

Wenn der Anlauf des Induktionsmotors beginnt, steht der Rotor still und ist nicht magnetisiert. Um ein Drehmoment zu erzeugen, ist es nötig, dass im Rotor ein bestimmtes Niveau an Magnetfluss existiert. Daher werden die Thyristoren zum Beginn des Anlaufs ein oder mehrere Male mit einer 2-Phasen-Zündung gezündet, um ein definiertes Niveau an Rotor-Magnetfluss zu erzeugen, siehe FIG 5a und 5b.

Messungen zur Demonstration der Leistungsfähigkeit

Im folgenden Teil sind zwei Messungen zu sehen, die ein unterschiedliches Verhalten zwischen dem klassischen und prädikativen Verfahren illustrieren

Diese Messung zeigt einen Start mit klassischem Startverfahren. Der Strom läuft hier in einem wiederkehrenden symmetrischen Muster durch den vorgegebenen Zündwinkel. Auch die Drehzahl steigt kontinuierlich.

Diese Messung zeigt einen Start mit einem prädikativen Verfahren Durch die Ausprägung des Entscheidungskriteriums verhält sich die Zündung der Thyristoren vollständig anders. Zunächst findet das Aufmagnetisieren des Rotors statt, gekennzeichnet durch gleichförmige Strompulse am Anfang. Anschließend nach ca. 180ms startet der eigentliche Staralgorithmus. Hier ist der Strom unstet und tritt quasi "Paketweise" auf. Auch die Beschleunigung erinnert insbesondere für niedrige Drehzahlen an Treppenstufen. Unter der Berücksichtigung der Tatsache, dass Durchlassverluste in Thyristoren nur dann auftreten, wenn ein Strom fließt, wird klar, dass die Verluste in den Thyristoren bei diesem Start deutlich geringer sind als bei dem vergleichbaren klassischen Startvorgang. Mindestens für die Statorwicklung des Motors gilt das Gleiche.

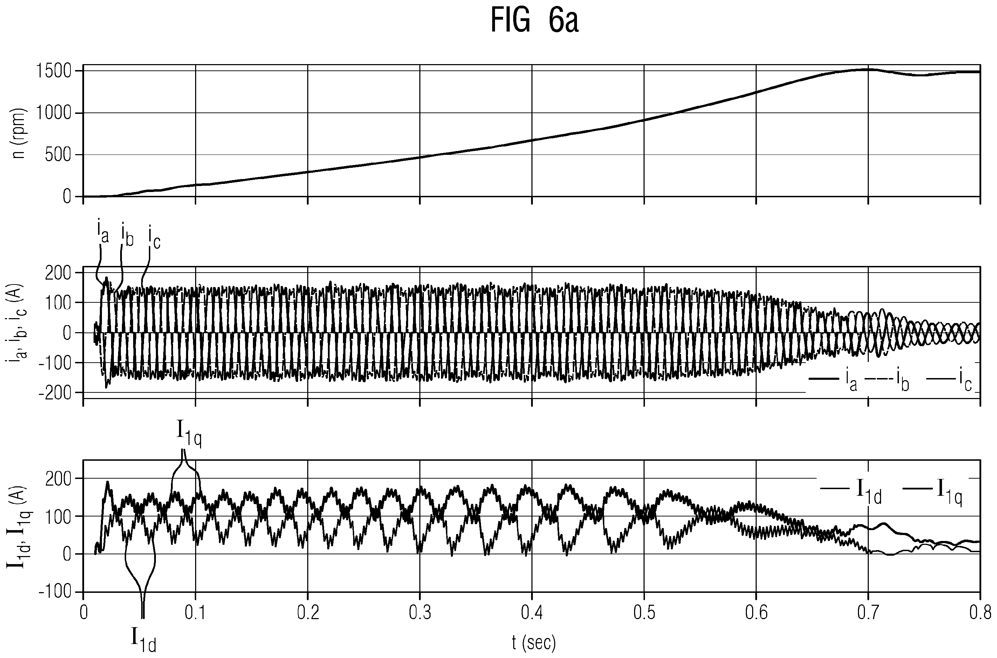

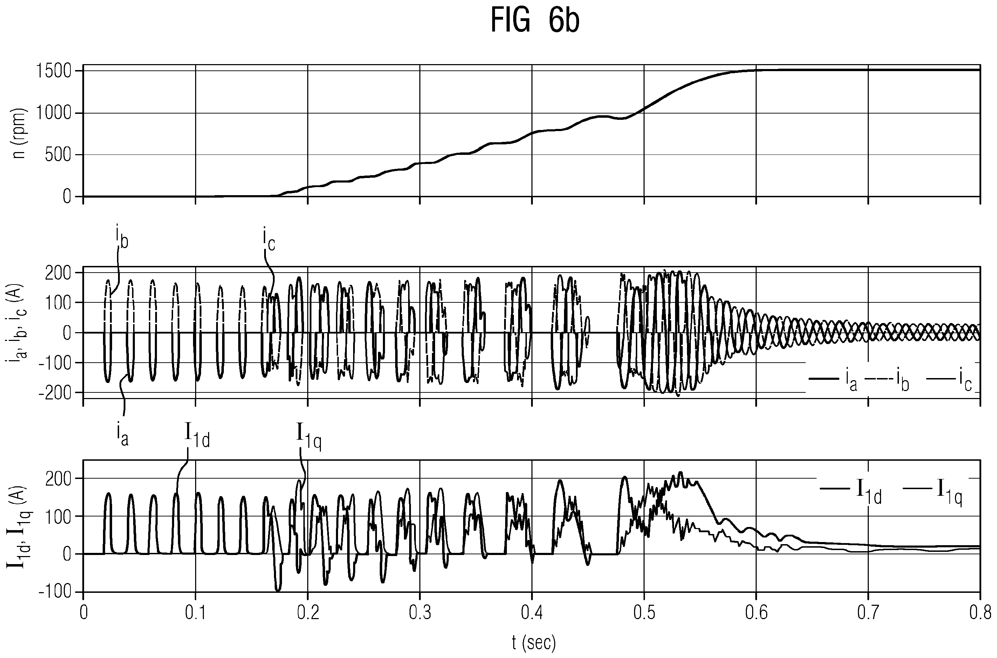

FIG 6a und 6b zeigen einen Vergleich des Verhaltens eines herkömmlichen und eines erfindungsgemäßen Algorithmus, die auf einem Sanftstarter-Motor-System gemäß FIG 1. laufen. Die Messungen der Spannungen und der Ströme erfolgen mit Hall-Sensoren, die an ein RCP-System angeschlossen sind, umfassend eine CPU zum Abarbeiten des Algorithmus (CPU = Central Processing Unit; RCP = Rapid Controller Prototyping). Die gezeigten Messwerte wurden mit einem handelsüblichen mehrkanaligen Leistungsmessgerät zum Messen physikalischer Werte erfasst. Die Rotorgeschwindigkeit wird mit einem induktiven Positionssensor gemessen. Tabelle 1 enthält die Motordaten des benutzten normalen Käfigläufer-Induktionsmotor.

Tabelle 1: Motordaten des benutzten Standardmodells des Käfigläufer-Induktionsmotors

| nominal power, $P_N$ | 15 kW |
|---|---|
| nominal voltage, $U_N$ | 230 V |
| nominal current, $U_N$ | 28.5 A |

(fortgesetzt)

| nominal frequency, $f_N$ | 50 Hz |
|---|---|
| number of pole pairs, $p$ | 2 |
| motor inertia, $J_M$ | 0.0850 kgm$^2$ |
| load inertia, $J_L$ | 0.0955 kgm$^2$ |
| stator DC resistance, $R_1$ | 0.150 Ohm |

Der Induktionsmotor ist mechanisch mit einem Permanentmagnet-Servomotor verbunden, der von einem High Performance Servo-Inverter gespeist wird. Mit diesem Inverter können mechanische Lasten mit verschiedenen Charakteristiken simuliert werden. Das Trägheitsmoment aus der Servo-Lastsimulation ist relativ klein im Vergleich zu typischen Industrieanwendungen; das führt zu einem relativ schnellen Hochlauf des Motors und einigen Oszillationen, insbesondere für die klassischen Algorithmus-Messungen in FIG 6a und 7a.

FIG 6a zeigt eine Messung eines Hochlaufs eines Sanftstarter-Motor-Systems, wobei ein herkömmlicher Algorithmus benutzt wird und eine Anwendung mit einem konstanten Lastdrehmoment $M_L$ von 30 Nm angetrieben wird.

Der Spannungswert wird durch einen Rampengenerator vorgegeben, der mit einer relativen Anlaufspannung von 55% der Nominalmotorspannung $U_N$ beginnt. Danach wird die Spannung mit einer kontinuierlichen Steigung von 25% pro sec erhöht. Die Trägheitsmasse von Motor und Last wird mit der Differenz zwischen dem Motordrehmoment $M_M$ und dem Lastdrehmoment $M_L$ beschleunigt. Diese Beschleunigung steigt mit der Motorgeschwindigkeit, d. h. der Drehzahl n, und hat eine mehr oder weniger konstante Form: die Drehzahl n steigt kontinuierlich. Das Stromprofil $i_a$, $i_b$, $i_c$ ist eine andauernd sich wiederholende Sequenz, die sich nur im Zündwinkel und einigen Oszillationen unterscheidet. Der Strom läuft in einem wiederkehrenden symmetrischen Muster durch den vorgegebenen Zündwinkel. Zusätzlich werden die d-Ströme $I_{1d}$ und q-Ströme $I_{1q}$ in den Rotor-Magnetfluss-orientierten Statorströmen angegeben. Diese Werte werden aus den gemessenen Statorströmen und den rekonstruierten Flusswerten des Rotor-Magnetflussmodells berechnet. Der Stromvektor ist geteilt in den Feld-erzeugenden Strom $I_{1d}$ und den Drehmoment-erzeugenden Strom $I_{1q}$. Unter Vernachlässigung der Oszillationen auf den Strömen ist der Feld-erzeugende Strom höher als der Drehmoment-erzeugende Strom. Wegen des mehr oder weniger identischen maximalen Stromwerts pro Phase bleiben auch die Mittelwerte der d- und q-Ströme konstant.

Gleichung (26) zeigt, dass das aktuelle Motordrehmoment $M_M$ vom q-Strom und dem Niveau des Rotor-Magnetflusses abhängt. Selbst wenn der q-Strom auf dem gleichen Niveau bleibt, kann durch Beeinflussung des Rotor-Magnetflusses mehr oder weniger Drehmoment erzeugt werden. Das ist der Grund für die ansteigende Beschleunigung bei höheren Rotorgeschwindigkeiten, ohne dass ein signifikant höherer q-Strom auftritt.

FIG 7a zeigt einen weiteren Hochlauf mit dem herkömmlichen Algorithmus, mit einem höheren konstanten Lastdrehmoment $M_L$ von 70 Nm. Die anderen Randbedingungen sind wie bei FIG 6a beschrieben.

FIG 6b zeigt eine Messung eines Hochlaufs eines Sanftstarter-Motor-Systems, wobei ein erfindungsgemäßer Prädiktions-Algorithmus benutzt wird. Die Last- und Netzbedingungen entsprechen denen des herkömmlichen Algorithmus von FIG 6a. Das Lastdrehmoment $M_L$ beträgt konstant 30 Nm.

Bevor der Prädiktions-Algorithmus startet, wird der Hochlaufsequenz ein spezieller Abschnitt hinzugefügt: Zunächst findet das Aufmagnetisieren des Rotors statt, gekennzeichnet durch gleichförmige Strompulse am Anfang.

Dabei erfolgen einige 2-Phasen-Zündungen, um die Rotor-Magnetflussverkettung $\left|\vec{\Psi}_2^K\right|$ zu generieren. Dies führt zu einem Stromraumvektor, dessen Richtung starr ist, dessen Amplitude aber pulsiert, siehe FIG 5a und 5b, was die Amplitude der Rotor-Magnetflussverkettung $\left|\vec{\Psi}_2^K\right|$ kontinuierlich erhöht. Weil lediglich Rotormagnetfluss und kein Motordrehmoment $M_M$ erzeugt wird, ist in diesem Abschnitt der Hochlaufsequenz ein reiner d-Strom vorhanden. Er fungiert im Zeitabschnitt von t=0 s bis t=0,18 s als eine Voraussetzung für die Drehmomenterzeugung in nächsten Teil der Hochlaufsequenz.

Danach beginnt der erfindungsgemäße Algorithmus zu laufen: Hier ist der Strom unstet und tritt quasi "paketweise" auf. Im Vergleich zum Hochlauf mit dem herkömmlichen Algorithmus gibt es kein kontinuierliches Zündprofil, sondern abwechselnd Zeitabschnitte mit und ohne Strom. Das führt auch zu einem Unterschied im Beschleunigungsverhalten. Die Beschleunigung ist nicht so gleichmäßig wie mit einem von einem herkömmlichen Algorithmus gesteuerten Sanftstarter, sondern hat, insbesondere für niedrige Drehzahlen, eine Stufenform: Es gibt Zeitabschnitte im Hochlauf, in denen die Beschleunigung relativ hoch ist (Zeitabschnitte mit Stromfluss), und Zeitabschnitte ohne Beschleunigung (Zeitabschnitte ohne Stromfluss). Außerdem weisen die d- und q-Ströme eine andere Form auf. Auch hier gibt es Zeitabschnitte mit und ohne Strom.

Darüber hinaus ist die Beziehung zwischen den Niveaus der d- und q-Ströme abweichend von der beim herkömmlichen Hochlauf. Der d-Strom ist viel geringer im Vergleich mit dem herkömmlichen Algorithmus. Auch ist der d-Strom geringer als während des Hochlaufs mit dem herkömmlichen Algorithmus. Das weist darauf hin, dass der verkettete Rotor-Magnetfluss bei Verwendung des Prädiktions-Algorithmus höher ist.

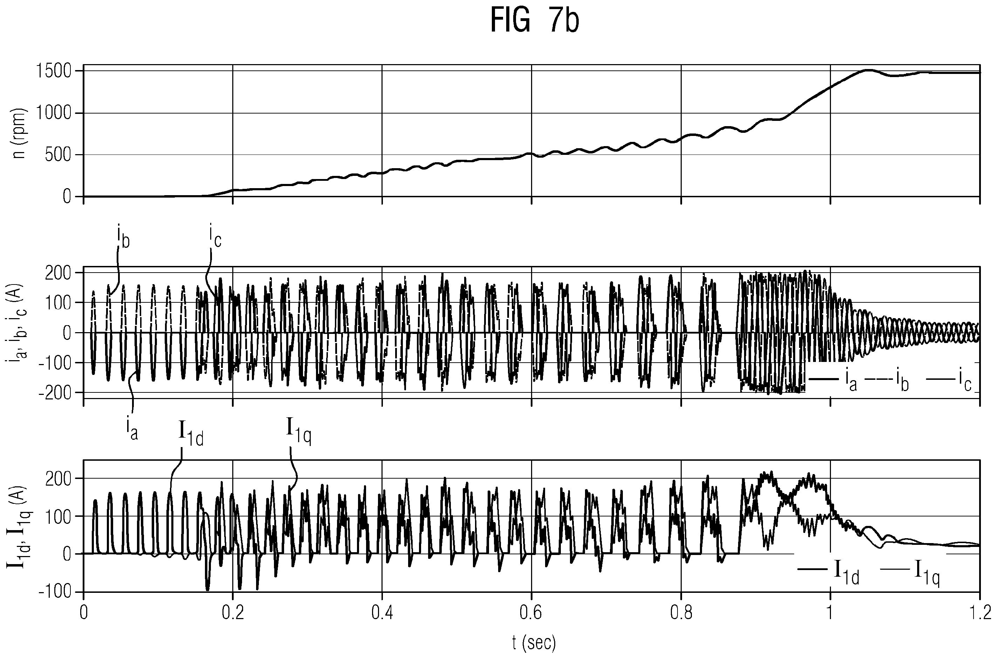

FIG 7b zeigt einen weiteren Hochlauf mit dem Prädiktions-Algorithmus, mit einem höheren konstanten Lastdrehmoment $M_L$ von 70 Nm. Die Hauptteile der Hochlaufsequenz ähneln denen der Sequenz mit dem Prädiktions-Algorithmus mit dem geringeren Lastdrehmoment $M_L$ von 30 Nm. Im Zeitabschnitt von t=0 s bis t=0,18 s erfolgt die Steigerung der absoluten Rotor-Magnetflussverkettung $\left|\vec{\Psi}_2^K\right|$. Danach ist dasselbe pulsierende Verhalten zu erkennen wie in FIG 6b. Aber beginnend bei t=0,88 s bis zur Synchronisation bei t=1,1 s ist ein Verhalten sichtbar, das signifikant von dem Verhalten davor abweicht. In diesem Zeitabschnitt des Hochlaufs ändert sich der Verlauf und der Stromverlauf ähnelt dem Stromverlauf mit dem herkömmlichen Algorithmus. Das ist nur möglich, weil die Erfordernisse der Entscheidungskriterien auch von dem Verhalten mit dem herkömmlichen Algorithmus erfüllt werden. Vor diesem Zeitabschnitt des Hochlaufs passen die Zündungen mit dem herkömmlichen Algorithmus nicht zu den Entscheidungskriterien. Zum Beispiel kann das Kriterium des minimalen Magnetflusses mit einer Zündung mit dem herkömmlichen Algorithmus nicht erfüllt werden. Der Prädiktions-Algorithmus erreicht dasselbe Ergebnis auf einem anderen Weg als die einfachere Zündwinkel-basierte Lösung, weil die herkömmliche Lösung die Erfordernisse der Entscheidungskriterien im letzten Zeitabschnitt des Hochlaufs erfüllt.

Beim Vergleich der Stromkurven des herkömmlichen Algorithmus und des erfindungsgemäßen Prädiktions-Algorithmus wird deutlich, dass der Prädiktions-Algorithmus zu einem Hochlauf mit einer kürzeren Stromleitzeit führt. Dadurch sind auch die Verluste in den Thyristoren des Sanftstarters und den Stromleitungen des Induktionsmotors geringer. Zur Abschätzung der Verluste $P_{thy}$ in den Thyristoren dient ein einfaches Modell, das auf der Vorwärtsspannung $U_f$ (engl.: forward voltage) und dem Thyristor-internen Widerstand $R_{on}$ (engl.: thyristor dynamic resistance) basiert:

$$P_{\text{thy}}(I_{\text{thy}}) \quad = \quad I_{\text{thy}} \cdot U_f + R_{on} \cdot I_{\text{thy}}^2 \qquad (27)$$

Die Parameter des verwendeten Thyristormoduls sind in Tabelle 2 zusammengefasst.

Tabelle 2: Technische Daten des verwendeten Thyristormoduls

| forward voltage, $U_f$ | 0.9 V |
|---|---|
| thyristor dynamic resistance, $R_{on}$ | 2 mOhm |

Der Einfachheit halber werden nur die resistiven Statorverluste verglichen, weil sie mit dem Widerstand $R_1$ der Statorwicklungen relativ einfach zu berechnen sind.

Tabellen 3 und 4 geben die berechneten Verluste, getrennt als Verluste im Thyristor (engl.: Thyristor losses) und resistive Statorverluste (engl.: Resistive stator losses), für einen Hochlauf des Motors mit einem konstanten Lastdrehmoment von 30 Nm und 70 Nm, für den Hochlauf mit einem herkömmlichen Algorithmus (engl.: Classic Start-up) und einen Hochlauf mit dem Prädikativen Algorithmus (engl.: Predictive Start-up). Die Werte wurden auf Basis der in den FIG 5a, 5b, 6a und 6b gezeigten Messungen berechnet. Der Zeitabschnitt der Energiemessung beginnt mit dem ersten Zündsignal und endet bei Erreichen eines stationären Stroms.

Tabelle 3: Berechnete Verluste für die Messung mit einem konstanten Lastdrehmoment von 30 Nm

|  | Classic Start-up | Predictive Start-up |
|---|---|---|
| Thyristor losses | 213 J | 108 J |
| Resistive stator losses | 3557 J | 1741 J |

Tabelle 4: Berechnete Verluste für die Messung mit einem konstanten Lastdrehmoment von 70 Nm

|  | Classic Start-up | Predictive Start-up |
|---|---|---|
| Thyristor losses | 414 J | 209 J |
| Resistive stator losses | 7614 J | 3585 J |

Die Tabellen 3 und 4 zeigen, dass die Verluste im Thyristor mit dem Prädikativen Algorithmus unter beiden Lastbedingungen im Vergleich zu dem herkömmlichen Algorithmus um fast 50 Prozent reduziert werden können. Auch die resistiven Statorverluste wurden halbiert.

Beide Fälle zeigen, dass es mit der Erfindung möglich ist, die Verluste im Sanftstarter und im Induktionsmotor während des Startvorgangs zu verringern. Somit wird es möglich, mehr Starts pro Zeiteinheit durchzuführen, die Kühlung zu reduzieren und somit kleinere Sanftstarter zu bauen und, wenn eine Anwendung oft gestartet wird, Energie einzusparen.

Figur 8 zeigt ein Ablaufdiagramm eines Verfahrens mit Verfahrensschritten S1 bis S4 zum Betreiben eines ASM mit einem Sanftstarter.

In einem ersten Verfahrensschritt S1 werden zu einem in der Zukunft liegenden Berechnungszeitpunkt mögliche Zündmöglichkeiten eines oder mehrerer Thyristoren des Sanftstarters ermittelt. Nach dem ersten Verfahrensschritt S1 wird ein zweiter Verfahrensschritt S2 ausgeführt. In dem zweiten Verfahrensschritt S2 wird ein elektrisches und/oder mechanisches Motorverhalten, wenn eine Zündung eines oder mehrerer Thyristoren des Sanftstarters durchgeführt würde, für die ermittelten Zündmöglichkeiten vorhergesagt. Nach dem zweiten Verfahrensschritt S2 wird ein dritter Verfahrensschritt S3 ausgeführt.

In dem dritten Verfahrensschritt S3 wird unter Verwendung des vorhergesagten Motorverhaltens entschieden, ob und welche Zündmöglichkeit gewählt werden soll.

In dem vierten Verfahrensschritt S4 werden ein oder mehrere Zündsignale für einen bzw. mehrere Thyristoren erzeugt, falls die Entscheidung für eine Zündmöglichkeit getroffen wurde. Nach dem vierten Verfahrensschritt S4 wird das Verfahren mit dem ersten Verfahrensschritt S1 fortgesetzt.

**Patentansprüche**

1. Verfahren zum Starten und Stoppen eines Asynchronmotors (4) mittels eines Sanftstarters (1), mit folgenden Schritten:

   - Ermitteln von zu einem in der Zukunft liegenden Berechnungszeitpunkt möglichen Zündmöglichkeiten eines oder mehrerer Thyristoren (2) des Sanftstarters (1);
   - Vorhersage des elektrischen und/oder mechanischen Motorverhaltens, wenn eine Zündung eines oder mehrerer Thyristoren (2) des Sanftstarters (1) durchgeführt würde, für die ermittelten Zündmöglichkeiten;
   - Entscheiden auf Basis des vorhergesagten Motorverhaltens, ob und welche Zündmöglichkeit gewählt werden soll; und
   - Erzeugen eines oder mehrerer Zündsignale für einen bzw. mehrere Thyristoren, falls die Entscheidung für eine Zündmöglichkeit getroffen wurde, **dadurch gekennzeichnet dass**
   - wiederholt ein aktueller Polradwinkel, eine aktuelle Rotordrehzahl, eine aktuelle Netzphasenlage und die aktuellen Statorphasenströme ermittelt werden,
   - unter Verwendung des aktuellen Polradwinkels, der aktuellen Rotordrehzahl, der aktuellen Netzphasenlage und der aktuellen Statorphasenströme ein Drehmomentverlauf eines auf den Rotor wirkenden Drehmoments für erste Zündmöglichkeiten, in denen durch Zünden von Thyristoren zwei Phasen stromleitend geschaltet werden und für eine zweite Zündmöglichkeit, in dem durch Zünden von Thyristoren drei Phasen stromleitend geschaltet werden, vorausberechnet wird, und
   - unter Verwendung der vorausberechneten Drehmomentverläufe für jeden Thyristor entschieden wird, ob er gezündet wird.

2. Verfahren nach Anspruch 1, wobei das Ermitteln von Zündmöglichkeiten für jeweils den nächsten Zeitschritt erfolgt.

3. Verfahren nach Anspruch 1 oder 2, wobei das Motorverhalten mittels eines transienten Motormodells modelliert wird.

4. Verfahren nach einem der vorhergehenden Ansprüche, wobei das Entscheiden auf Basis einer oder mehrerer folgender Entscheidungskriterien erfolgt: Maximaler Statorstrom, Maximales Drehmoment, Minimale Leitzeit für Thyristoren, Minimales Durchschnittsdrehmoment, Maximaler Rotorfluss, Minimales Rotorflusswachstum durch die Zündung, Thyristorverluste, Motorverluste.

5. Verfahren nach einem der vorhergehenden Ansprüche, wobei zum unmittelbar nächsten Berechnungszeitpunkt keine Zündung erfolgt und die Vorhersage für einen Berechnungszeitpunkt, der auf den unmittelbar nächsten Berechnungszeitpunkt folgt, abgewartet wird, falls die Entscheidung getroffen wurde, dass keine Zündmöglichkeit sinnvoll ist.

6. Verfahren nach einem der vorhergehenden Ansprüche, wobei nur Zündmöglichkeiten ermittelt werden, die negative Drehmomente zur Folge haben und damit den Asynchronmotor (4) aktiv bremsen.

7. Verfahren nach einem der vorhergehenden Ansprüche, wobei dem Schritt des Ermittelns von Zündmöglichkeiten ein Schritt der Magnetflusserzeugung im Rotor durch Zündungen der Thyristoren vorgeschaltet ist.

8. Verfahren nach Anspruch 7, wobei der Magnetfluss im Rotor durch zweiphasige Zündungen der Thyristoren in immer der gleichen Netzphasenlage erzeugt wird.

9. Sanftstarter (1) mit einer Zündsignaleinheit (48) und Mitteln (41), die geeignet sind, die Schritte des Verfahrens nach einem der Ansprüche 1 bis 8 auszuführen.

10. Computerprogrammprodukt, umfassend Befehle, die bewirken, dass der Sanftstarter (1) des Anspruchs 9 die Verfahrensschritte nach einem der Ansprüche 1 bis 8 ausführt.

11. Computerlesbares Medium, auf dem das Computerprogrammprodukt nach Anspruch 10 gespeichert ist.

## Claims

1. Method for starting and stopping an asynchronous motor (4) by means of a soft starter (1), having the following steps:

   - ascertaining firing opportunities possible for one or more thyristors (2) of the soft starter (1) at a calculation time in the future;
   - forecasting for the ascertained firing opportunities the electrical and/or mechanical motor behaviour if a firing of one or more thyristors (2) of the soft starter (1) were performed;
   - taking the forecast motor behaviour as a basis for deciding whether and which firing opportunity is supposed to be chosen; and
   - generating one or more firing signals for one or more thyristors if the decision has been made to take a firing opportunity,
   **characterized in that**
   - a present rotor angle, a present rotor speed, a present grid phase angle and the present stator phase currents are ascertained repeatedly,
   - the present rotor angle, the present rotor speed, the present grid phase angle and the present stator phase currents are used to anticipate a torque response for a torque acting on the rotor for first firing opportunities, in which firing of thyristors turns on two phases, and for a second firing opportunity, in which firing of thyristors turns on three phases, and
   - the anticipated torque responses are used to decide whether each thyristor is fired.

2. Method according to Claim 1, wherein firing opportunities are ascertained for the next particular time step.

3. Method according to Claim 1 or 2, wherein the motor behaviour is modelled by means of a transient motor model.

4. Method according to one of the preceding claims, wherein the decision is made on the basis of one or more of the following decision criteria: maximum stator current, maximum torque, minimum on-time for thyristors, minimum average torque, maximum rotor flux, minimum rotor flux growth as a result of the firing, thyristor losses, motor losses.

5. Method according to one of the preceding claims, wherein firing does not take place at the immediate next calculation time and the forecast for a calculation time that follows the immediate next calculation time is awaited if it has been decided that a firing opportunity is not useful.

6. Method according to one of the preceding claims, wherein only firing opportunities that result in negative torques and therefore actively slow down the asynchronous motor (4) are ascertained.

7. Method according to one of the preceding claims, wherein the step of ascertaining firing opportunities is preceded by a step of magnetic flux generation in the rotor by way of firings of the thyristors.

8. Method according to Claim 7, wherein the magnetic flux in the rotor is generated by way of two-phase firings of the thyristors at always the same grid phase angle.

9. Soft starter (1) having a firing signal unit (48) and means (41) that are suitable for carrying out the steps of the method according to one of Claims 1 to 8.

10. Computer program product, comprising instructions that cause the soft starter (1) of Claim 9 to carry out the method steps according to one of Claims 1 to 8.

11. Computer-readable medium on which the computer program product according to Claim 10 is stored.

**Revendications**

1. Procédé de démarrage et d'arrêt d'un moteur (4) asynchrone au moyen d'un démarreur (1) doux, comprenant les stades suivants :

   - détermination de possibilités d'amorçage, possibles à un instant de calcul dans l'avenir, d'un ou de plusieurs thyristors (2) du démarreur (1) doux ;
   - prédiction, pour les possibilités d'amorçage déterminées, du comportement électrique et/ou mécanique du moteur, si on avait effectué un amorçage d'un ou de plusieurs thyristors (2) du démarreur (1) doux ;
   - décision, sur la base du comportement prédit du moteur, si et quelle possibilité d'amorçage doit être choisie ; et
   - production d'un ou de plusieurs signaux d'amorçage d'un ou de plusieurs thyristors, si on a pris la décision d'une possibilité d'amorçage,
   **caractérisé en ce que**,
   - de manière répétée, on détermine un angle de roue polaire en cours, une vitesse de rotation rotorique en cours, une position de phases du réseau en cours et les courants de phases statoriques en cours,
   - en utilisant l'angle de roue polaire en cours, la vitesse rotorique en cours, la position de phases du réseau en cours et les courants de phases statoriques en cours, on calcule à l'avance une courbe d'un couple appliqué au rotor pour de premières possibilités d'amorçage, dans lesquelles, par amorçage de thyristors, on met deux phases à l'état conducteur du courant et, pour une deuxième possibilité d'amorçage, dans laquelle, par amorçage de thyristor, on met trois phases à l'état conducteur du courant, et
   - en utilisant les courbes de couple calculées à l'avance, on décide, pour chaque thyristor, si on l'amorce.

2. Procédé suivant la revendication 1, dans lequel la détermination de possibilités d'amorçage s'effectue pour respectivement le laps de temps suivant.

3. Procédé suivant la revendication 1 ou 2, dans lequel on modélise le comportement du rotor au moyen d'un modèle transitoire de moteur.

4. Procédé suivant l'une des revendications précédentes, dans lequel la décision s'effectue sur la base d'un ou de plusieurs critères de décision suivants : courant statorique maximum, couple maximum, temps de conduction minimum des thyristors, couple moyen minimum, flux rotorique maximum, croissance minimum du flux rotorique par l'amorçage, pertes des thyristors, pertes du moteur.

5. Procédé suivant l'une des revendications précédentes, dans lequel on n'effectue pas, à l'instant de calcul immédiatement suivant, un amorçage et on attend la prédiction d'un instant de calcul, qui suit l'instant de calcul immédiatement suivant, si on a pris la décision qu'une possibilité d'amorçage n'est pas judicieuse.

6. Procédé suivant l'une des revendications précédentes, dans lequel on ne détermine que les possibilités d'amorçage qui ont pour conséquence des couples négatifs et freinent ainsi activement le moteur (4) asynchrone.

7. Procédé suivant l'une des revendications précédentes, dans lequel un stade de production de flux magnétique dans le rotor par amorçage des thyristors précède le stade de la détermination de possibilités d'amorçage.

8. Procédé suivant la revendication 7, dans lequel on produit le flux magnétique dans le rotor par amorçage biphasé des thyristors dans toujours la même position de phases du réseau.

9. Démarreur (1) doux comprenant une unité (48) de signal d'amorçage et des moyens (41), qui sont propres à effectuer les stades du procédé suivant l'une des revendications 1 à 8.

10. Produit de programme d'ordinateur comprenant des instructions, qui font que le démarreur (1) doux de la revendication 9 effectue les stades de procédé suivant l'une des revendications 1 à 8.

11. Support, déchiffrable par ordinateur, sur lequel le produit de programme d'ordinateur de la revendication 10 est mis en mémoire.

# FIG 1

# FIG 2

# FIG 3

# FIG 4

# FIG 5a

$I_c = 0$

$I_b = 0$    $I_a = 0$

$\varphi_K = 30°$

$\vec{i}_a$

$\vec{i}_b$

$\vec{i}_a + \vec{i}_b$

$\beta$

$\alpha$

# FIG 5b

$|i_a + i_b|$

$|i_a|$

$|i_b|$

i

t

FIG 6a

# FIG 6b

EP 4 128 522 B1

# FIG 7a

EP 4 128 522 B1

# FIG 7b

EP 4 128 522 B1

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1240712 B1
- EP 2571157 A1

**In der Beschreibung aufgeführte Nicht-Patentliteratur**

- A novel MPC-SVM strategy for direct torque flux control of an induction motor drive system using a matrix converter. **CHOI WOO JIN et al.** 2014 IEEE INTERNATIONAL CONFERENCE ON INDUSTRIAL TECHNOLOGY (ICIT). IEEE, 26 February 2014, 181-186